(19) Europäisches Patentamt European Patent Office Office européen des brevets

(11) **EP 4 530 658 A1**

(12) **EUROPEAN PATENT APPLICATION**

(43) Date of publication:
02.04.2025 Bulletin 2025/14

(21) Application number: 23201062.9

(22) Date of filing: 29.09.2023

(51) International Patent Classification (IPC):
**G01S 5/02** (2010.01)  **G01S 19/21** (2010.01)
**H04W 12/104** (2021.01)

(52) Cooperative Patent Classification (CPC):
**G01S 5/0215; G01S 5/0205; G01S 19/215;
H04L 63/107; H04L 63/1483; H04W 12/63;
H04W 12/66**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **OTUNG, Andikan**
**Slough, SL1 2BE (GB)**

(74) Representative: **Haseltine Lake Kempner LLP**
**Cheapside House**
**138 Cheapside**
**London EC2V 6BJ (GB)**

(54) **GEOLOCATION**

(57)    A computer-implemented method comprising: computing, for each probe of a plurality of probes used in a first instance of geolocation for locating a target, a trust score based on a trust score penalty corresponding to the probe; and selecting, based on the trust scores, at least one probe from the plurality of probes for use in a second instance of geolocation, wherein the computer-implemented method comprises, before computing the trust scores based on the trust score penalties, computing the trust score penalties by performing a penalty computation process.

Target IP Address

S12 Probe Selection

S13 Probing Execution

S14 Results Processing

Multiple probe networks

Update/Maintain Persistent Trust Scores  S18

Post-Geolocation Processing  S16

Location Estimate

FIGURE 1

**EP 4 530 658 A1**

**Description**

The present invention relates to geolocation, and in particular to a computer-implemented method, a computer program, and an information programming apparatus.

IP (internet protocol) geolocation, or "internet geolocation" is the process of determining the physical geographic location of an entity connected to and/or communicating over the Internet. It has several important applications including:

- Enabling banks to better prevent phishing attacks, money laundering, and other security breaches.
- Enabling law enforcement to better monitor online trafficking and trading with banned nations.
- Enabling content providers to adhere with international laws, and
- Enabling social media companies to identify threats and provide tailored services.

Active (or interactive) network geolocation methods provide geolocation by interaction using fresh measurements and thus produce more relevant/accurate and up-to-date results than passive (or non-interactive) geolocation, in which the location of a target is gleaned from database records.

The main goals, and thus challenges, of internet geolocation are:

- Precision - how close can location estimations get to the actual location of the target.
- Timeliness - how quickly can the location estimation be retrieved by a requestor.
- Reliability - how consistently can location estimations prove accurate.
- Resilience - to what extent can the reliability, precision and timeliness of geolocations persist under the threat of attackers.

In light of the above, a geolocation-related method is desired. Such a method may for example improve reliability/accuracy of geolocation.

According to an embodiment of a first aspect there is disclosed herein a computer-implemented method comprising: computing, for each probe of a plurality of probes used in a first (an) instance of geolocation for locating a target, a trust score based on a trust score penalty corresponding to the probe; and selecting, based on the trust scores, at least one probe from the plurality of probes for use in a second (another) instance of geolocation (wherein a probe whose corresponding trust score is more indicative of trustworthiness is more likely to be selected (than a probe whose corresponding trust score is less indicative of trustworthiness)), wherein the computer-implemented method comprises, before computing the trust scores based on the trust score penalties, computing the trust score penalties by performing a penalty computation process comprising: for each pair of the plurality of probes, comparing a/the sum of (the) respective distances of the probes of the pair to the target (/sum of the distance of each probe of the pair to the target) with the/a distance between the two probes of the pair, and if the distance between the two probes of the pair is greater than the sum of the respective distances of the probes of the pair to the target (/sum of the distance of each probe of the pair to the target), adding a contribution to each of the trust score penalties corresponding respectively to the probes of the pair; and/or for each probe of the plurality of probes, (performing a plurality of comparisons respectively comprising) comparing a/the distance of the probe to the target with distance measures corresponding to the other probes, respectively, wherein each distance measure comprises a sum of a/the distance between the probe and the corresponding said other probe and a/the distance of the corresponding said other probe to the target, and, for each (said) comparison, if the distance of the probe to the target is greater than the distance measure corresponding to the said other probe, adding a contribution to each of the trust score penalties corresponding respectively to the probe and the other said probe.

The respective distances of the probes to the target may be distances reported in the first instance of geolocation.

Each distance measure may comprise a buffer contribution which is a percentage of the sum.

The computer-implemented method may comprise, for each pair of probes, computing the distance between the probes of the pair based on longitude and latitude coordinates of each probe of the pair.

Computing the distance between the probes of the pair may comprise using the Haversine formula.

Computing, for each probe of the plurality of probes, a trust score based on the trust score penalty corresponding to the probe may comprise updating, based on the trust score penalty, an initial trust score corresponding to the probe and wherein the initial trust score is (based on) a previous trust score corresponding to a previous instance of geolocation.

Computing, for each probe of the plurality of probes, a trust score based on the trust score penalty corresponding to the probe may comprise updating, based on the trust score penalty, an initial trust score corresponding to the probe.

For each probe of the plurality of probes, updating the initial trust score based on the trust score penalty may comprise computing a linear combination of the initial trust score and the trust score penalty.

The initial trust score may be (based on) a previous trust score corresponding to a previous instance of geolocation.

Updating the initial trust scores may comprise adding a penalty recovery term to each of the initial trust scores, the penalty recovery term corresponding to a sum of trust score penalties computed in the previous instance of geolocation.

The penalty recovery term may correspond to the sum of the trust score penalties computed in the previous instance of geolocation divided by a number of landmarks available as probes for each (the first / a said) instance of geolocation.

The addition of the penalty recovery term to each of the initial trust scores may change the initial trust scores in a direction opposite to the direction each trust score is changed by the computation of the linear combination of the initial trust score and the corresponding trust score penalty (of the first instance).

The addition of the penalty recovery term to each of the initial trust scores may change the initial trust scores in a direction opposite to the direction each trust score is changed by the penalty recovery term.

Updating the initial trust scores may comprise adding a trust score recovery term to each of the initial trust scores.

The trust score recovery term may be a constant.

The computer-implemented method may comprise determining the trust score recovery term based on the position of the average of all of the initial trust scores within a defined trust score range, so that the closer the average of all the initial trust scores is to an upper endpoint of the trust score range the more the trust score recovery term reduces the average of all the initial trust scores, the closer the average of all the initial trust scores is to a lower endpoint of the trust score range the more the trust score recovery term increases the average of all the initial trust scores, and the closer the average of all the initial trust scores is to a midpoint of the trust score range the less the trust score recovery term changes the average of all the initial trust scores.

The average of all the initial trust scores may be computed based on initial trust scores corresponding to the landmarks, respectively. The trust score recovery term may be added to all the initial trust scores corresponding to the landmarks, respectively.

The addition of the trust score recovery term to each of the initial trust scores may change the initial trust scores in a direction opposite to the direction each trust score is changed by the computation of the linear combination of the initial trust score and the corresponding trust score penalty (of the first instance).

The instances of geolocation may take place within a geolocation system, and the geolocation system may comprise a/the plurality of landmarks which are available for use as probes in each instance of geolocation.

Persistent trust scores may be maintained for landmarks across different instances of geolocation. A probe is a landmark which is selected for geolocation for a given instance).

The computer-implemented method may comprise maintaining a trust score corresponding to a probe as a trust score corresponding to the landmark to which the probe corresponds.

Selecting at least one probe from the plurality of probes for use in the second instance of geolocation may comprise using a probabilistic filter, wherein a probability of selecting a probe is based on the trust score corresponding to the probe (wherein a probe whose corresponding trust score is more indicative of trustworthiness has a higher probability (than a probe whose corresponding trust score is less indicative of trustworthiness)).

The second instance of geolocation may be for locating the same target as the first instance of geolocation and the probability of selecting a probe may be based on a proximity of the probe to the target (wherein a probe closer to the target has a higher probability than a probe further away from the target)).

The computer-implemented method may comprise, when a plurality of probes report contradictory measurements as a result of the first (or second) instance of geolocation, determining which measurement to accept based on the trust scores of the probes.

The computer-implemented method may comprise accepting the measurement of the probe with the trust score most indicative of trustworthiness.

The computer-implemented method may comprise rejecting the measurement of the probe with the trust score least indicative of trustworthiness.

The computer-implemented method may comprise: maintaining a plurality of region trust scores corresponding respectively to a plurality of geographic regions in which (said) probes/landmarks are located; when a contribution is added to a trust score penalty corresponding to a probe, adding a contribution to a region trust score penalty corresponding to the region in which the probe is located; and when a trust score corresponding to a probe is adjusted based on a trust score penalty, adjusting the trust score corresponding to the geographical region in which the probe is located based on the corresponding region trust score penalty.

The computer-implemented method may comprise, before selecting, based on the trust scores, at least one probe from the plurality of probes for use in the second instance of geolocation, modifying the trust score corresponding to each probe based on the region trust score corresponding to the region in which the probe is located.

The selection of at least one probe from the plurality of probes for use in the second instance of geolocation may be based on the trust scores of the regions in which the probes are located.)

For each probe, (in the probabilistic filter) the probability of selecting a probe for use in the second instance of geolocation may be based on the trust score of the region in which the probe is located).

The geographic region may be a site or a building or a town/city or a state/county/country.

The computer-implemented method may comprise: maintaining a plurality of aspect trust scores corresponding respectively to a plurality of aspects associated with measurements from the probes, wherein the aspects comprise at least one of: types of transmission media (along the measured/measurement route between a said probe and the target), internet service providers (in charge of at least a portion of the measured/measurement route between a said probe and the target); vendors (of cables or devices used along the measured/measurement route between a said probe and the target) and autonomous systems (in charge of at least a portion of the measured route between a said probe and the target); when a contribution is added to a trust score penalty corresponding to a probe, adding a contribution to at least one aspect trust score penalty corresponding to at least one aspect associated with the probe's measurement; and when a trust score corresponding to a probe is adjusted based on a trust score penalty, adjusting the at least one aspect trust score corresponding to the at least one aspect associated with the probe's measurement based respectively on the corresponding at least one aspect trust score penalty.

The computer-implemented method may comprise, before selecting, based on the trust scores, at least one probe from the plurality of probes for use in the second instance of geolocation, modifying the trust score corresponding to at least one probe based on the aspect trust score corresponding to at least one aspect associated across different instances of geolocation with the probe's measurement.

The computer-implemented method may comprise: maintaining a plurality of intermediary trust scores corresponding respectively to a plurality of intermediary entities included in measured/measurement routes between the probes and the target (or included in the geolocation network); when a contribution is added to a trust score penalty corresponding to a probe, adding a contribution to at least one intermediary trust score penalty corresponding to at least one intermediary entity included in the measured/measurement route between the probe and the target; and when a trust score corresponding to a probe is adjusted based on a trust score penalty, adjusting the at least one intermediary trust score corresponding to the at least one intermediary entity included in the measured/measurement route between the probe and the target based respectively on the corresponding at least one intermediary trust score penalty.

The computer-implemented method may comprise, before selecting, based on the trust scores, at least one probe from the plurality of probes for use in the second instance of geolocation, modifying the trust score corresponding to at least one probe based on the intermediary trust score corresponding to at least one intermediary entity included in measured/measurement routes between the probe and the target across different instances of geolocation.

The intermediary entities may include any of routers, switches, hubs, interfaces, devices, links, peering points, internet exchanges, cables, nodes, and hops.

The intermediary entities may include nodes along measured/measurement paths between a said probe and the target.

The computer-implemented method may comprise, when a plurality of probes report contradictory measurements as a result of the first (or second) instance of geolocation, determining which measurement to accept based on the trust scores of the probes and based on at least one intermediary trust score corresponding to at least one intermediary entity included in the measured/measurement route between the probe and the target in that instance of geolocation

The computer-implemented method may comprise, when a plurality of probes report contradictory measurements as a result of the first (or second) instance of geolocation, determining which measurement to accept based on the trust scores of the probes and based on: at least one intermediary trust score corresponding to at least one intermediary entity included in the measured/measurement route between the probe and the target in that instance of geolocation; and/or at least one aspect trust score corresponding to at least one aspect associated with the probe's measurement in that instance of geolocation.

The computer-implemented method may comprise, for a plurality of probes with equal trust scores reporting contradictory measurements as a result of the first (or second) instance of geolocation, determining which measurement to accept based on: at least one intermediary trust score corresponding to at least one intermediary entity included in the measured/measurement route between the probe and the target in that instance of geolocation; and/or at least one aspect trust score corresponding to at least one aspect associated with the probe's measurement in that instance of geolocation.

The computer-implemented method may comprise, after the second instance of geolocation has been performed: for each pair of a plurality of probes used in the second instance of geolocation: comparing a/the sum of (the) respective distances of the probes of the pair to the target (/sum of the distance of each probe of the pair to the target) of the second instance of geolocation with the/a distance between the two probes of the pair; and if the distance between the two probes of the pair is greater than the sum of the respective distances of the probes of the pair to the target (/sum of the distance of each probe of the pair to the target), adding a contribution to each of a pair of second-instance-trust score penalties corresponding to the pair of probes; computing, for each probe of the plurality of probes used in the second instance of geolocation, a second-instance-trust score based on the second-instance-trust score penalty corresponding to the probe; and selecting, based on the second-instance-trust scores, at least one probe from the plurality of probes used in the second instance of geolocation for use in a third instance of geolocation (wherein a probe whose corresponding second-instance-trust score is more indicative of trustworthiness is more likely to be selected (than a probe whose corresponding second-instance-trust score is less indicative of trustworthiness)), wherein computing, for each probe of the plurality of probes used in the second instance of geolocation, the second-instance-trust score comprises, if the probe was used in the first instance of geolocation, updating, based on the second-instance-trust score penalty corresponding to the probe, the trust score computed based on the first instance of geolocation as an (a second-instance-) initial trust score (and if the probe was not used in the first instance of geolocation, updating based on the second-instance-trust score penalty corresponding to the probe an (a second-instance-) initial trust score (corresponding to the probe)).

The computer-implemented method may comprise, after the second instance of geolocation has been performed: computing second-instance trust score penalties by performing the penalty computation process in respect of (or using measurements based on/determined during) the second instance of geolocation; computing, for each probe of the plurality of probes used in the second instance of geolocation, a second-instance-trust score based on the second-instance-trust score penalty corresponding to the probe; and selecting, based on the second-instance-trust scores, at least one probe from the plurality of probes used in the second instance of geolocation for use in a third instance of geolocation (wherein a probe whose corresponding second-instance-trust score is more indicative of trustworthiness is more likely to be selected (than a probe whose corresponding second-instance-trust score is less indicative of trustworthiness)), wherein computing, for each probe of the plurality of probes used in the second instance of geolocation, the second-instance-trust score comprises, if the probe was used in the first instance of geolocation, updating, based on the second-instance-trust score penalty corresponding to the probe, the trust score computed based on the first instance of geolocation as an (a second-instance-) initial trust score (and if the probe was not used in the first instance of geolocation, updating based on the second-instance-trust score penalty corresponding to the probe an (a second-instance-) initial trust score (corresponding to the probe)).

For each probe of the plurality of probes, updating the initial trust score based on the second-instance-trust score penalty may comprise computing a linear combination of the initial trust score and the second-instance-trust score penalty.

Updating the initial trust scores may comprise adding a (second-instance-) penalty recovery term to each of the initial trust scores corresponding to a sum of trust score penalties computed in the first instance of geolocation or a sum of trust score penalties computed since the previous instance in which a trust score recovery term was added to trust scores.

The penalty recovery term may correspond to the sum divided by a number of landmarks available as probes for each (the first or second / a said) instance of geolocation.

The addition of the penalty recovery term to each of the initial trust scores may change the initial trust scores in a direction opposite to the direction each trust score is changed by the computation of the linear combination of the initial trust score and the corresponding second-instance-trust score penalty.

Updating the initial trust scores may comprise adding a (second-instance-) trust score recovery term to each of the initial trust scores.

The trust score recovery term may be a constant.

The computer-implemented method may comprise determining the trust score recovery term based on the position of the average of all of the initial trust scores within a defined trust score range, so that the closer the average of all the initial trust scores is to an upper endpoint of the trust score range the more the trust score recovery term reduces the average of all the initial trust scores, the closer the average of all the initial trust scores is to a lower endpoint of the trust score range the more the trust score recovery term increases the average of all the initial trust scores, and the closer the average of all the initial trust scores is to a midpoint of the trust score range the less the trust score recovery term changes the average of all the initial trust scores.

The average of all the initial trust scores may be computed based on initial trust scores corresponding to the landmarks, respectively, and optionally wherein the trust score recovery term is added to all the initial trust scores corresponding to the landmarks, respectively.

The addition of the trust score recovery term to each of the initial trust scores may change the initial trust scores in a direction opposite to the direction each trust score is changed by the computation of the linear combination of the initial trust score and the corresponding second-instance-trust score penalty.

The computer-implemented method may comprise, before computing, for each of the plurality of probes, the trust score based on the trust score penalty corresponding to the probe: for each probe of the plurality of probes (used in the first instance of geolocation): (performing a plurality of comparisons respectively comprising) comparing a/the distance of the probe to the target with distance measures corresponding to the other probes, respectively, wherein each distance measure comprises a sum of a/the distance between the probe and the corresponding said other probe and a/the distance of the corresponding said other probe to the target; and for each comparison, if the distance of the probe to the target is greater than the distance measure corresponding to the said other probe, adding a contribution to each of the trust score penalties corresponding to the probe and the other said probe.

Each distance measure may comprise a buffer contribution which is a percentage of the sum.

The computer-implemented method may comprise, before computing, for each of the plurality of probes, the trust score based on the trust score penalty corresponding to the probe: for each pair of the plurality of probes (used in the first instance of geolocation): comparing a pair of traceroutes (between the probes of the pair, respectively, and the target) corresponding to the pair of probes and, when a hop between a first node and second node is present in both traceroutes, comparing a first hop distance between the first and second nodes computed based on one of the traceroutes of the pair with a second hop distance between the first and second nodes computed based on the other traceroute of the pair, respectively; when the magnitude of the difference between the first and second hop distances is above a hop-distance-threshold level, adding a contribution to each of the trust score penalties corresponding respectively to the probes of the pair.

The computer-implemented method may comprise, before computing, for each of the plurality of probes, the trust score based on the trust score penalty corresponding to the probe: for each pair of the plurality of probes (used in the first instance of geolocation): comparing a first distance between the probes estimated by one of the probes to a second distance between the probes estimated by the other probe of the pair; and when the magnitude of the difference between the first and second distance is above a distance-threshold level, adding a contribution to each of the trust score penalties corresponding respectively to the probes of the pair.

The threshold level may be a percentage of the first distance.

The computer-implemented method may comprise performing the first instance of geolocation.

The computer-implemented method may comprise performing the second instance of geolocation using the at least one selected probe.

The computer-implemented method may comprise performing the third instance of geolocation using the at least one probe selected for the third instance of geolocation.

According to an embodiment of a second aspect (wherein the above considerations apply equally to the second aspect) there is disclosed herein a computer-implemented method comprising: for each pair of a plurality of probes used in a first (an) instance of geolocation for locating a target: comparing a/the sum of (the) respective distances of the probes of the pair to the target (/sum of the distance of each probe of the pair to the target) with the/a distance between the two probes of the pair; and if the distance between the two probes of the pair is greater than the sum of the respective distances of the probes of the pair to the target (/sum of the distance of each probe of the pair to the target), adding a contribution to each of a pair of trust score penalties corresponding to the pair of probes; computing, for each probe of the plurality of probes, a trust score based on the trust score penalty corresponding to the probe; selecting, based on the trust scores, at least one probe from the plurality of probes for use in a second (another) instance of geolocation (wherein a probe whose corresponding trust score is more indicative of trustworthiness is more likely to be selected (than a probe whose corresponding trust score is less indicative of trustworthiness)).

According to an embodiment of a third aspect (wherein the above considerations apply equally to the third aspect) there is disclosed herein a computer-implemented method comprising: computing, for each probe of a plurality of probes used in a first (an) instance of geolocation for locating a target, a trust score based on a trust score penalty corresponding to the probe; and selecting, based on the trust scores, at least one probe from the plurality of probes for use in a second (another) instance of geolocation (wherein a probe whose corresponding trust score is more indicative of trustworthiness is more likely to be selected (than a probe whose corresponding trust score is less indicative of trustworthiness)), wherein the computer-implemented method comprises, before computing the trust scores based on the trust score penalties, computing the trust score penalties by performing a penalty computation process comprising: for each pair of the plurality of probes, comparing a/the sum of (the) respective distances of the probes of the pair to the target (/sum of the distance of each probe of the pair to the target) with the/a distance between the two probes of the pair, and if the distance between the two probes of the pair is greater than the sum of the respective distances of the probes of the pair to the target (/sum of the distance of each probe of the pair to the target), adding a contribution to each of the trust score penalties corresponding respectively to the probes of the pair; and/or for each probe of the plurality of probes, (performing a plurality of comparisons respectively comprising) comparing a/the distance of the probe to the target with distance measures corresponding to the other probes, respectively, wherein each distance measure comprises a sum of a/the distance between the probe and the corresponding said other probe and a/the distance of the corresponding said other probe to the target, and, for each (said) comparison, if the distance of the probe to the target is greater than the distance measure corresponding to the said other probe, adding a contribution to each of the trust score penalties corresponding respectively to the probe and the other said probe; and/or for each pair of the plurality of probes, comparing a pair of traceroutes (between the probes of the pair, respectively, and the target) corresponding to the pair of probes and, when a hop between a first node and second node is present in both traceroutes, comparing a first hop distance between the first and second nodes computed based on one of the traceroutes of the pair with a second hop distance between the first and second nodes computed based on the other traceroute of the pair, respectively, and, when the magnitude of the difference between the first and second hop distances is above a hop-distance-threshold level, adding a contribution to each of the trust score penalties corresponding respectively to the probes of the pair; and/or for each pair of the plurality of probes, comparing a first estimated distance between the probes estimated by one of the probes with a second estimated distance between the probes estimated by the other probe of the pair, and, when the magnitude of the difference between the first and second distances is above a distance-threshold level, adding a contribution to each of the trust score penalties corresponding respectively to the probes of the pair.

The hop-distance-threshold level may be a percentage of the first hop distance or of the second hop distance or of a mean hop distance of the first and second hop distances.

The distance-threshold level may be a percentage of the first estimated distance or of the second estimated distance or of a mean estimated distance of the first and second estimated distances.

According to an embodiment of a fourth aspect there disclosed herein a computer program which, when run on a computer, causes the computer to carry out a method comprising: computing, for each probe of a plurality of probes used in a first (an) instance of geolocation for locating a target, a trust score based on a trust score penalty corresponding to the probe; and selecting, based on the trust scores, at least one probe from the plurality of probes for use in a second (another) instance of geolocation (wherein a probe whose corresponding trust score is more indicative of trustworthiness is more likely to be selected (than a probe whose corresponding trust score is less indicative of trustworthiness)), wherein the computer-implemented method comprises, before computing the trust scores based on the trust score penalties, computing the trust score penalties by performing a penalty computation process comprising: for each pair of the plurality of probes, comparing a/the sum of (the) respective distances of the probes of the pair to the target (/sum of the distance of each probe of the pair to the target) with the/a distance between the two probes of the pair, and if the distance between the two probes of the pair is greater than the sum of the respective distances of the probes of the pair to the target (/sum of the distance of each probe of the pair to the target), adding a contribution to each of the trust score penalties corresponding respectively to the probes of the pair; and/or for each probe of the plurality of probes, (performing a plurality of comparisons respectively comprising) comparing a/the distance of the probe to the target with distance measures corresponding to the other probes, respectively, wherein each distance measure comprises a sum of a/the distance between the probe and the corresponding said other probe and a/the distance of the corresponding said other probe to the target, and, for each (said) comparison, if the distance of the probe to the target is greater than the distance measure corresponding to the said other probe, adding a contribution to each of the trust score penalties corresponding respectively to the probe and the other said probe.

According to an embodiment of a fifth aspect there disclosed herein an information processing apparatus comprising a memory and a processor connected to the memory, wherein the processor is configured to: compute, for each probe of a plurality of probes used in a first (an) instance of geolocation for locating a target, a trust score based on a trust score penalty corresponding to the probe; and select, based on the trust scores, at least one probe from the plurality of probes for use in a second (another) instance of geolocation (wherein a probe whose corresponding trust score is more indicative of trustworthiness is more likely to be selected (than a probe whose corresponding trust score is less indicative of trustworthiness)), wherein the processor is configured to, before computing the trust scores based on the trust score penalties, compute the trust score penalties by performing a penalty computation process comprising: for each pair of the plurality of probes, comparing a/the sum of (the) respective distances of the probes of the pair to the target (/sum of the distance of each probe of the pair to the target) with the/a distance between the two probes of the pair, and if the distance between the two probes of the pair is greater than the sum of the respective distances of the probes of the pair to the target (/sum of the distance of each probe of the pair to the target), adding a contribution to each of the trust score penalties corresponding respectively to the probes of the pair; and/or for each probe of the plurality of probes, (performing a plurality of comparisons respectively comprising) comparing a/the distance of the probe to the target with distance measures corresponding to the other probes, respectively, wherein each distance measure comprises a sum of a/the distance between the probe and the corresponding said other probe and a/the distance of the corresponding said other probe to the target, and, for each (said) comparison, if the distance of the probe to the target is greater than the distance measure corresponding to the said other probe, adding a contribution to each of the trust score penalties corresponding respectively to the probe and the other said probe.

Features relating to any aspect/embodiment may be applied to any other aspect/embodiment.

Reference will now be made, by way of example, to the accompanying drawings, in which:

Figure 1 is a diagram illustrating a method;
Figure 2 is a diagram useful for understanding embodiments;
Figure 3 is a diagram useful for understanding embodiments;
Figure 4 is a diagram illustrating a method;
Figure 5 is a diagram illustrating a method;
Figure 6 is a diagram illustrating tables;
Figure 7 is a diagram illustrating a system;
Figure 8 is a diagram illustrating a method;
Figure 9 is a diagram illustrating a method; and
Figure 10 is a diagram illustrating an apparatus.

The following definitions may be used in the description but are not exhaustive.

IP Geolocation -Also known as Network/Internet/Device Localization/Geolocation. The process of finding the geographic location of a device connected to the Internet. Geolocation may be referred to as localization.

Landmarks - Nodes whose locations are known and which may be used as probes in the geolocation process. Also referred to as beacons or anchors.

Target - The device that is being geolocated.

Probes - In any given instance of geolocation, a landmark which is used in the instance of geolocation may be referred to as a probe.

In some cases, the terms probe and landmark may be used interchangeably.

Whilst some geolocation algorithms consider the possibility that a target to geolocate may be lying, the vast majority of geolocation algorithms assume that the probes used in the geolocation process always tell the truth - which is a dangerous assumption in the real world.

In general, geolocation algorithms consider each geolocation instance/exercise separately, and the vast majority don't even consider malicious probes within their threat model. Therefore geolocation attempts in line with such algorithms are vulnerable to manipulations and subversion by probes, which are considered trusted in the vast majority of cases.

As a first comparative example, a geolocation algorithm that considers the possibility of malicious probes may be considered. In the first comparative example, the geolocation algorithm considers only the information gleaned from the geolocation measurements of the current geolocation instance/cycle and thus there may be insufficient information to distinguish between malicious and benign probes. For example, following measurements in a geolocation cycle, if it is found that a probe A does not contradict probes C & D but does contradict a probe B, and that the probe B does not contradict the probes C & D and contradicts only the probe A, there is insufficient information to determine whether the probe A or B is lying.

As a second comparative example, a decentralized method for geolocating entities may be considered. In the second comparative example, the method uses a random selection of probe nodes and confidence scores created for each probe measurement process to mitigate against adversarial threats from probes. The random selection is intended to produce an unpredictable variation in the probes used to make it more difficult for an attacker to pre-empt and manipulate measurements. The second comparative example requires the target to participate in a custom geolocation algorithm and requires all probe nodes and targets to be known to each other, so that confidence scores may be computed. These requirements reduce the wider applicability of the method and its possible scale.

Embodiments of the invention disclosed herein leverage objective indicators of malice, formed from current (and previous) measurements, to maintain a metric of trustworthiness (a trust score) for each probe. This trust score may be applied to reduce the probability that malicious probes are selected and may also be used to resolve and eliminate contradictory geolocation measurements.

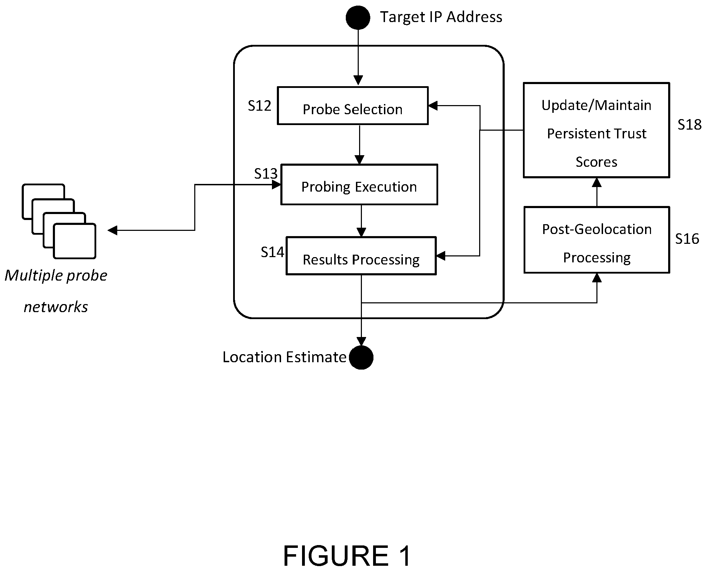

An overview of a method according to an embodiment is illustrated in Figure 1. The method illustrated in Figure 1 comprises steps S12-S18. Step S12 comprises probe selection (i.e. selecting landmarks to be used as probes for the instance of geolocation concerned). Step S13 comprises probing execution (i.e. receiving measurements from the selected probes). As illustrated in Figure 1, step S13 may comprise accessing multiple "probe networks". Step S14 comprises results processing to generate a location estimate. For example, step S14 comprises processing the results collected in step S13 and on that basis determining a location estimate. Step S16 comprises post-geolocation processing, e.g. computing a trust score penalty based on the results. Step S18 comprises updating trust scores for the probes based on the computed trust score penalties. Given that a penalty may not be applied for some probes (or, e.g., the penalty may be zero), step S18 may comprise maintaining some trust scores.

Steps S12-S14 correspond to a geolocation process and steps S16 and S18 correspond to an augmentation of a geolocation process (or a geolocation augmentation). As shown in Figure 1, the steps S16 and S18 effect the processing of steps S14 and S12, respectively. Therefore the steps S12, S14, S16 and S18 may be considered to correspond to an augmentation of a geolocation process. An actual geolocation processing step may be considered to be comprised within step S13. A focus of the present disclosure is on the augmentation to a geolocation process - that is, a focus is on processing comprised within steps S16 and S18 and how these steps affect the processing of steps S12 and S14. As shown in Figure 1, an input to the geolocation process is a target IP address. The target IP address refers to the IP address corresponding to the device that one is trying to geolocate. This IP address dictates the destination two which probes will send their interrogatory (measurement) packets.

A geolocation augmentation as disclosed herein may be defined as follows:

- Calculation of Trust-Scores (TS)

    1. Conversion of geolocation measurements into Trust Score penalties
    2. Application of penalties to affected trust scores
    3. Periodic TS recovery process to prevent flatlining of all trust scores

- Application of Trust-Scores

4. Probe selection

- Probabilistic filtering

5. Geolocation discrepancy resolution (to distinguish between contradictory measurements)

The steps 1-5 are described in more detail below.

1. Conversion of geolocation measurements to trust score penalties.

This step may be considered to correspond to step S16 in Figure 1. That is, step S16 may comprise this step 1.

For the i'th probe $\rho_i$ of the set of I probes $P_{probes}[x]$ selected for an instance $x$ of geolocation ($\rho_i \in P_{probes}[x]$), the distance $r_{i \to t}[x]$ between said probe and the target node $t$ for the concerned instance may be computed from the round trip time $\tau_{i \to t}$ and a distance-delay coefficient $\delta_{i \to t}[x]$ via:

$$r_{i \to t}[x] = \delta_{i \to t}[x] \times \tau_{i \to t}[x],$$

where x is a discrete-time variable representing the x'th epoch of geolocation estimation (or $x^{th}$ instance of geolocation). There are of course a number of other ways that a distance may be computed based on a measured delay, for example involving a number of hops and/or the geographies traversed, which may produce a variable distance delay coefficient.

A **Zero Radial Intersection Contradiction** $C_{i,j}^{ZRI}$ is defined as when a probe $\rho_i$ produces a radial area of geolocation estimation that bears no overlap with that of another probe $p_j$. This may be considered an indication of malice from one of the probes. $C_{i,j}^{ZRI}$ occurs when the distance between the two probes concerned, $d_{ij} > r_{i \to t} + r_{j \to t}$.

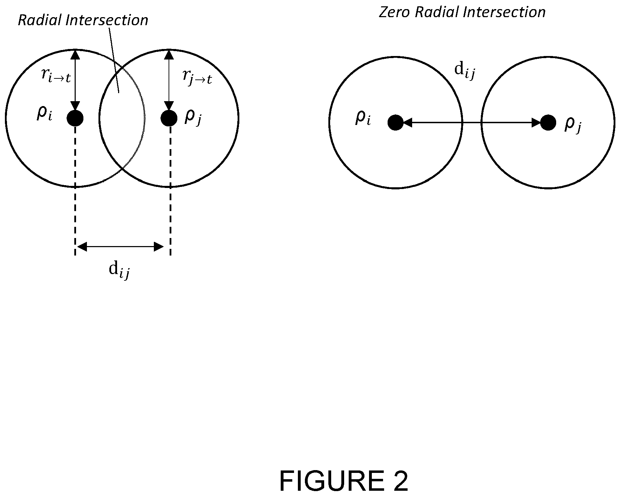

Figure 2 illustrates two cases: on the left, a radial intersection is present for the two probes shown and $d_{ij} < r_{i \to t} + r_{j \to t}$; whereas on the right-hand-side a zero radial intersection contradiction has occurred and $d_{ij} > r_{i \to t} + r_{j \to t}$.

The $C_{i,j}^{ZRI}$ penalty for a given epoch x is defined as:

$$C_{i,j}^{ZRI}[x] = \begin{cases} 1, & when \ \mathrm{d}_{ij}[x] > r_{i \to t}[x] + r_{j \to t}[x] \\ 0, & otherwise \end{cases}$$

At a given epoch $x$, the trust score penalty attributed to probe $i$ as a result of zero radial intersection contradictions $\zeta_i^{ZRI}[x]$, may be given by:

$$\zeta_i^{ZRI}[x] = \sum_{\substack{j=1 \\ j \neq i}}^{I[x]} \left( \frac{C_{i,j}^{ZRI}[x]}{I[x] - 1} \right)$$

where $I[x]$ is the number of probes selected for the current x'th epoch of geolocation.

There are other indications of malice (which may be referred to as contradictions) that may give rise to a contribution to a trust score penalty for a probe, and therefore the total trust score penalty $\zeta_i^{\Sigma}[x]$ for the j'th probe for a given epoch x, may be given by:

$$\zeta_i^{\Sigma}[x] = \sum_{k=1}^{K} \alpha_k^C \left( \frac{C_{i,j}^k[x]}{K} \right)$$

where K is the number of malice indicating contradictions, $C_{i,j}^k$ is the /c'th malice indicating contradiction or discrepancy and $\alpha_k^C$ is a coefficient to weight the contribution of each type (e.g. ZRI or encompass-contradiction, etc., as described later) of defined contradiction.

The distance between probes ($d_{ij}$) may be calculated using the longitude and latitude coordinates of each probe, using the Haversine formula (e.g. https://www.geeksforgeeks.org/program-distance-two-points-earth/). There are numerous other ways to calculate the distance between two points on earth including: The Spherical Law of Cosines (https://www.movable-type.co.uk/scripts/latlong.html), Vincenty's Method (https://en.wikipedia.org/wiki/Vincenty%27s_formu lae), the Andoyer-Lambert Formula and Sodano's Method and other iterative methods (https://rosap.ntl.bts.gov/view/dot/12122).

2. Application of penalties to affected trust scores:

The computed trust score penalties may be applied to the trust scores using the following equation:

$$T_{n=F_L(i)}[x] = T_{n=F_L(i)}[x-1] - \beta \times \zeta_i^\Sigma[x], \text{ for } i = 1 \dots I$$

where $F_L$ is a look-up function that converts the index $i$ of $P_{probes}[x]$ into the appropriate index of the total set of landmarks $L$ where ($P_{probes}[x]$ c $L$), $T_n$ is the trust score of the n'th landmark and $\beta$ is a *trust score convergence factor*. The lookup function is provided because not all landmarks may be selected for use as probes in any given instance of geolocation, but a trust score may still be maintained for such landmarks across such an instance.

Step S18 in Figure 1 may be considered to comprise this step 2.

3. Periodic Trust Score Recovery Process to prevent flatlining of all trust scores:

A penalty recovery term may be added to each of the trust scores (e.g. for all the landmarks or probes) to prevent flatlining (because over time successive penalties reduce trust scores). A penalty recovery term, $PR_n$ for a landmark n may be computed as follows

$$PR_n[x_R] = \alpha_R \frac{\zeta_N^\Sigma[x_R - 1]}{N} + c$$

where $x_R$ represents each update recovery cycle (e.g. the update recovery cycle may correspond to the epoch/instance of geolocation, or may be different/separate; for example a trust score recovery process may be carried out less frequently than geolocation instances), $\zeta_N^\Sigma[x_R - 1]$ is the total trust score penalty meted out to all probes since the last epoch of trust score recovery calculation, $a_R$ is a recovery coefficient (e.g. $a_R = 1$ by default), and $N$ is the total number of landmarks available. Constant c determines whether and how great of an increase occurs in trust scores in the case that no penalties have occurred since [$x_R$ - 1]. The constant c may be adjust by a user of a system for performing the method described herein. A penalty score recovery term may be added after each instance of geolocation or less frequently.

Trust scores may be balanced in other ways, in addition to or instead of the above penalty recovery term. For example, a process for balancing trust scores comprises separating trust scores (which are incremented and deducted) from "trust values" (which comprises a trust score applied to a transfer function - such as softmax). in such a case, the trust values are used for probabilistic selection (described below) rather than the trust scores themselves. Alternatively (or additionally), another process for balancing trust scores comprises tapering Trust Score increments and decrements according to where the current trust score or trust score average lies within a range of possible trust scores. For example, trust score increments and decrements for an average trust score at either extreme of the range would be smaller than for an average trust score at the middle of the range.

Step S18 in Figure 1 may be considered to comprise this step 3.

4. Probe Filtering

During the selection of probes ($P_{probes}[x]$), for a given epoch of geolocation, the likelihood of selecting malicious probes can be reduced by applying a probabilistic filter during probe selection, where the probability $P\rho_i$ of selecting a probe (or landmark) $\rho_i$ is given by:

$$P\rho_i[x] = \frac{T_n[x]}{\sum_{n=1}^{N} T_n}$$

The selection of probes according to computed probability may be carried out in a number of ways. In one example way, each landmark is assigned some portion of a range proportional to its computed probability and then a number is randomly selected within the range and the landmark corresponding to the portion in which falls the random number is selected for us as a probe in the instance of geolocation concerned. This particular method may be considered to use a cumulative density function (CDF). In general, selection according to probability may be referred to as weighted random sampling (or selection or choice). A number of processes exist to effect weighted random sampling (e.g. https://link.springer.com/referenceworkentry/10.1007/978-0-387-30162-4_478).

Step S12 in Figure 1 may be considered to comprise this step 4.

5. Geolocation discrepancy resolution

During geolocation, if contradictory measurements are produced by different probes, trust scores may be used to determine which measurements to accept and which to reject.

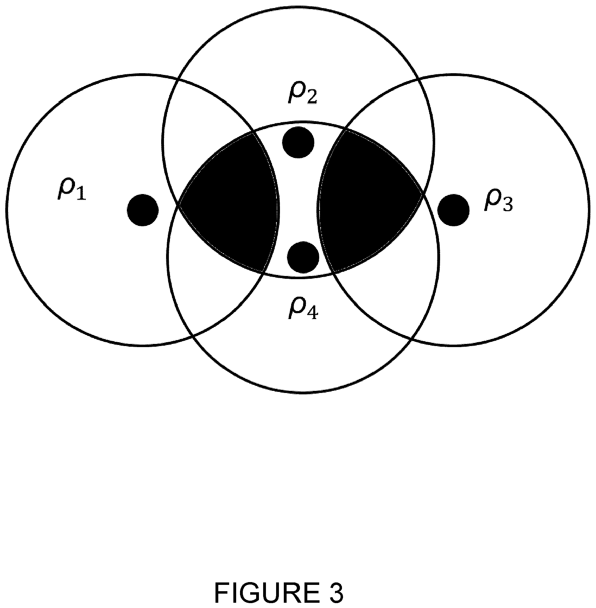

Figure 3 is a diagram useful for understanding an instance of discrepancy resolution. In Figure 3, two distinct and separate areas for the geolocation of the target node are defined by measurements received from the probes $\rho_1$, $\rho_2$, $\rho_4$ and $\rho_2$, $\rho_3$, $\rho_4$. That is, the radiuses/measurements for $\rho_1$ and $\rho_3$ contradict each other.

By comparing the trust scores for the two probes $T_{n=FL(1)}$ [x] and $T_{n=FL(3)}$ [x], it can be determined which measurement to accept and which to reject - i.e. the probe measurement for the probe with the trust score more indicative of trustworthiness (in this case the higher trust score) is accepted. Step S14 in Figure 1 may be considered to comprise this step 5.

A method according to embodiments may comprise the steps 1-5. A method according to embodiments may comprise the steps S16, S18 and S12 of Figure 1, or S16, S18 and S14 of Figure 1, or S16, S18, S12, and S14 of Figure 1, or all the steps of Figure 1.

The conversion of geolocation measurements into Trust Score penalties (in step 1) can be achieved in multiple ways. A process using Zero Radial Intersection Contradiction has been described above. Other processes which may be used in addition to or instead of the Zero Radial Intersection Contradiction process are described later below. Such other contradiction processes that may indicate potentially malicious probes include the following:

- Encompass-contradiction: A probe reporting a minimum delay corresponding to an area of proximity that encompasses an area considered to be too great. For example, a circular area whose radius is greater than half the diameter of the earth. Alternatively, if the radius from a first probe (measured between the first probe and the target) is greater than the sum of the distance between that first probe and a second probe summed together with the measured distance between the second probe and the target (together with a buffer, e.g. 10%), then the first probe's measurement may be considered to contradict the second probe's measurement. In this case, estimated area of the first probe envelopes the estimated area of the second probe, with some buffer, which indicates that the distance reported by the first probe is too great, or the distance reported by the second probe is too small.

- Traceroute-contradiction: Active geolocation techniques may involve traceroute measurements. In this case it is possible to deduce the distance between hops using the traceroute measurements reported by a probe. Should the traceroutes from multiple probes share some of the same hops, then the distance estimates of those shared hops may be calculated from multiple probe measurements. If the hop distance estimated as a result of a first probe differs from the hop distance estimated as a result of a second probe by an amount that is at least or greater than a percentage (e.g. 10%) of the lowest estimated hop distance, then the two probes' measurements may be considered to contradict each other.

- Distance-contradiction: In certain geolocation methods, probes may estimate the distance between themselves. In this case, it is possible to infer a contradiction between first and second probes if a first difference between the first and second probes estimated by the first probe differs from a second difference between the first and second probes estimated by the second probe by an amount greater than a threshold, e.g. a certain percentage - for example 10% of their mean value.

A trust score penalty may be computed based on any of the contradictions described herein (ZRI contradiction, Encompass-contradiction, Traceroute-contradiction, and Distance-contradiction). For example, where more than one type of contradiction is employed to generate a trust score penalty, a contribution (e.g. 1, optionally weighted by a weighting factor specific to the type of contradiction) to the trust score penalty may be added in respect of each contradiction found.

For probe filtering (described in step 4) the proximity of each probe to the target may be incorporated such that the closer a probe is the estimated target location, the more likely it is to be selected for a following instance of geolocation (as well as the condition that the more indicative of trustworthiness the probe's trust score is, the more likely the probe is to be selected). For example, the selection probability for the probes (or landmarks) may be calculated as follows:

$$\rho_i[x] = \frac{T_i[x]^{a_T}}{d_i[x]^{a_d} \sum_{n=1}^{N} \frac{T_i[x]^{a_T}}{d_i[x]^{a_d}}}$$

where $d_i[x]$ is the distance between the i'th probe and the estimated location of the target of the x'th epoch, and $a_d$ and $a_T$ are coefficients (exponents) to balance the weighting between proximity and trust, respectively.

The proximity of the probe to the target may be employed in other ways to affect the selection probability of the probe.

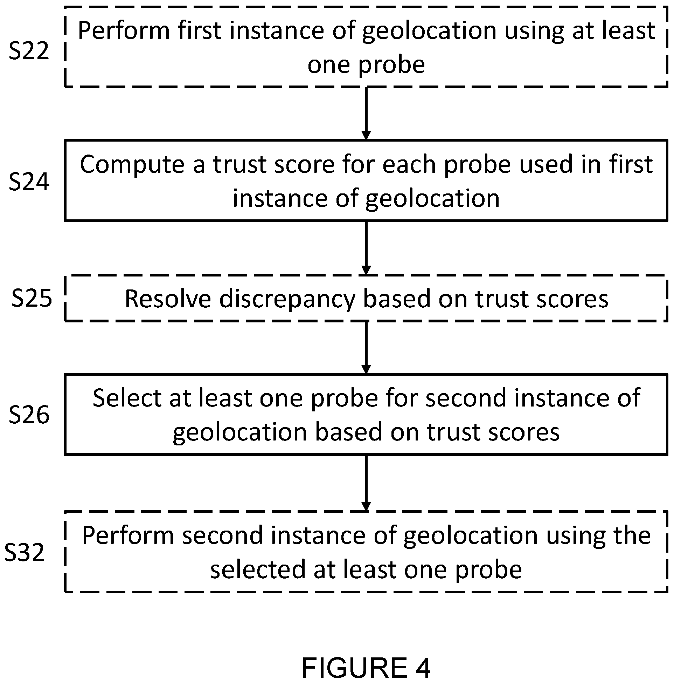

Figure 4 illustrates a method according to an embodiment. The method illustrated in Figure 4 comprises steps S22-S32. The method may comprise just steps S24 and S26 and may not comprise any of the other steps (as indicated by the broken lines of the other steps). The method may additionally comprise (as well as steps S24 and S26) just step S22, and/or step S25, or just steps S25 and S32. Alternatively, the method may comprise just steps S24 and S25.

Step S22 comprises performing a first instance of geolocation using at least one probe. The at least one probe is at least one landmark belonging to a set of landmarks available for use as probes in geolocation. The label "first" is not meant to imply that there has been no previous instance of geolocation preceding the "first" instance of geolocation. Indeed, in some aspects computing a trust score comprises updating an initial trust score, where that initial trust score is or corresponds to a previous trust score corresponding to a previous instance of geolocation (in this way the trust scores may be continuously updated at successive instances of geolocation and this may be considered an iterative process - of course, not all trust scores are necessarily updated at all instances of geolocation).

The first instance of geolocation may be performed according to any geolocation method/algorithm, for example steps S13 and S14 of Figure 1. The particular method of geolocation is not important because an aspect of the disclosure is focused on an augmentation to a geolocation method, the augmentation defined by any of steps S24, S25, and S26, for example.

Step S24 comprises computing a trust score for each probe used in the first instance of geolocation. The trust scores may be computed as described above with reference to Figure 1.

In an implementation of the method, the trust score penalties are computed using a first penalty process based on a ZRI contradiction, the first penalty process comprising, for each pair of the plurality of probes used in the first instance of geolocation for locating a target:

- comparing the sum of the respective distances of the probes of the pair to the target with the distance between the two probes of the pair (which may be calculated based on latitude and longitude using the Haversine formula as described above); and
- if the distance between the two probes of the pair is greater than the sum of the respective distances of the probes of the pair to the target, adding a contribution to each of a pair of trust score penalties corresponding to the pair of probes.

The trust score is then computed for each probe based on the trust score penalty corresponding to the probe.

In general, in other implementations the trust score penalties may be computed based on any of first to fourth penalty processes. The first penalty process is as described above.

The second penalty process comprises, for each probe of the plurality of probes, performing a plurality of comparisons respectively comprising comparing the distance of the probe to the target with distance measures corresponding to the other probes, respectively, wherein each distance measure comprises a sum of the distance between the probe and the corresponding said other probe and the distance of the corresponding said other probe to the target, and, for each said comparison, if the distance of the probe to the target is greater than the distance measure corresponding to the said other probe, adding a contribution to each of the trust score penalties corresponding respectively to the probe and the other said probe.

The second penalty process is based on the encompass-contradiction described above. That is, the second penalty process comprises, for a given probe (which will be referred to as a "first" probe), comparing the distance between the first probe and the target with a distance measure corresponding to another probe (a "second" probe). The distance measure comprises a sum of the distance between the first probe and the second probe and the distance of the second probe to the target, and may also be summed together with a "buffer" which may be a percentage of the sum of the distance between the first probe and the second probe and the distance of the second probe to the target. If the distance of the first probe to the target is greater than the distance measure, then a contribution is added to each of the trust score penalties corresponding respectively to the first and second probes. This process is repeated so each other probe of the plurality of probe is used as the "second" probe, and then this is repeated so that each probe of the plurality of probe is used as the "first" probe.

The third penalty process comprises, for each pair of the plurality of probes, comparing a pair of traceroutes (between the probes of the pair, respectively, and the target) corresponding to the pair of probes and, when a hop between a first node and second node is present in both traceroutes, comparing a first hop distance between the first and second nodes computed based on one of the traceroutes of the pair with a second hop distance between the first and second nodes computed based on the other traceroute of the pair, respectively, and, when the magnitude of the difference between the first and second hop distances is above a hop-distance-threshold level, adding a contribution to each of the trust score penalties corresponding respectively to the probes of the pair.

The third penalty process is based on the traceroute-contradiction described above. The hop-distance-threshold level may comprise a percentage of the lowest (or highest) hop distance or the mean hop distance and/or may comprise a constant.

The fourth penalty process comprises, for each pair of the plurality of probes, comparing a first estimated distance between the probes estimated by one of the probes with a second estimated distance between the probes estimated by the other probe of the pair, and, when the magnitude of the difference between the first and second distances is above a distance-threshold level, adding a contribution to each of the trust score penalties corresponding respectively to the probes of the pair.

The fourth penalty process is based on the distance-contradiction described above. The distance-threshold level may comprise a percentage of the mean estimated distance or of the lowest (or highest) estimated distance and/or may comprise a constant.

"Each pair" as used in the above description of the penalty processes may comprise all possible pairs of probes among the plurality of probes used in the first instance of geolocation. For example, if the plurality of probes comprises probes a, b, and c, this gives rise to three pairs, a+b, a+c, and b+c.

S24 may comprise any of the first to fourth penalty processes to compute the trust score penalties, for example the first penalty process, or any combination of the first to fourth penalty processes. Step S24 comprises computing the trust scores based on the computed trust score penalties.

Step S25 comprises resolving at least one discrepancy between probe measurements based on the trust scores. Step S32 may comprise the processing described above with respect to step S14 and/or step 5. Of course, it may be the case that no such discrepancies exist based on the measurements. Step S25 may be carried out based on the initial trust scores (e.g. before they have been updated based on the first instance of geolocation) within the processing of step S22. In any case, step S25 may comprise, where any contradiction is found (e.g. any of ZRI contradiction, Encompass-contradiction, Traceroute-contradiction, Distance-contradiction) between two probe measurements, rejecting one of the probe measurements and accepting the other for use in the determination of the target location, to improve the accuracy of the geolocation instance.

Step S26 comprises selecting at least one probe for a second instance of geolocation based on the trust scores. Step S26 may comprise any of the probabilistic filter selection processes described above, e.g. with reference to step S12 and/or step 4.

Step S32 comprises performing a second instance of geolocation using the selected at least one probe. The same considerations described above with respect to the first instance of geolocation apply to the second instance of geolocation.

In an implementation example, step S24 comprises updating (or maintaining, in the case that no trust score penalty or penalty recovery term is added) initial trust scores. As described above, the trust scores may correspond to landmarks which are available for use as probes in an instance of geolocation. The method may therefore comprise maintaining landmark trust scores across multiple geolocation instances. Updating an initial trust score may comprise adding or subtracting the corresponding trust score penalty term (and adding or subtracting a penalty recovery term). That is, updating a trust score (an initial trust score) may comprise the processing described above with respect to step S18 and/or steps 2 and 3.

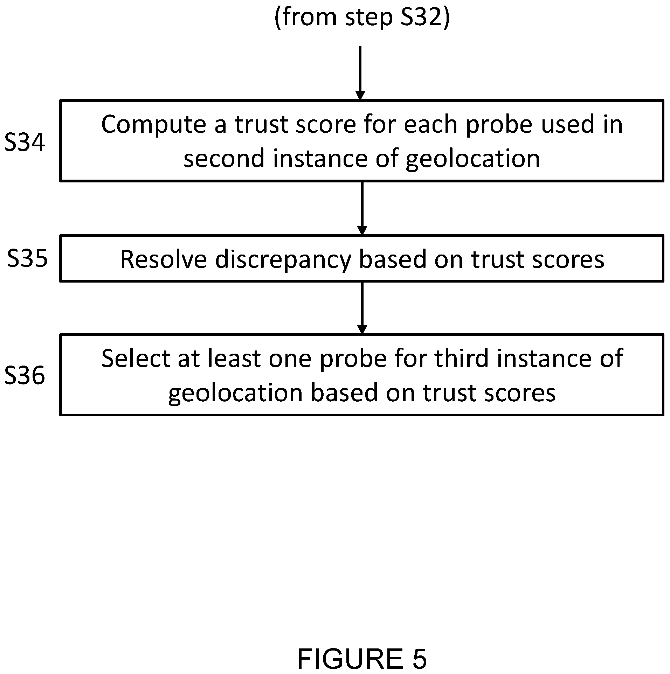

Figure 5 illustrates an extension to the method of Figure 4 comprising steps S34-S36 which, in an implementation example, are performed after the step S32 in Figure 4. The extension may comprise step S34 together with either or both of steps S35 and S36.

Step S34 comprises computing a trust score (may be referred to as a "second-instance" trust score) for each probe used in the second instance of geolocation. The above description of step S24 applies equally to step S34, except that any updating of trust scores may include updating trust scores which were computed based on the first instance of geolocation.

Step S35 comprises resolving at least one discrepancy based on the second-instance trust scores. Step S37 comprises selecting at least one probe for a third instance of geolocation based on the second-instance trust scores (and based on trust scores for those landmarks whose trust scores have not been updated based on the second instance of geolocation, if applicable). The description of steps S25 and S26 apply equally to steps S35 and S36. The trust scores computed based on the first instance of geolocation may be referred to as first-instance trust scores.

The trust score penalties may be computed in a different way to the equations provided above. The trust score penalties may be applied to the trust scores in a different way to that described above. Methods have been described in which trust scores are positive and the greater the trust score the greater the trustworthiness of the corresponding landmark/probe, and so that a trust score penalty reduces a trust score. Of course, the trustworthiness scale may work in the opposite direction so that the lower the trust score the greater the trustworthiness of the corresponding landmark/probe and so that a trust score penalty increases a trust score. Trust scores may also be negative and it will be appreciated how penalties would affect trust scores in such cases. It may be said that a trust score penalty changes a trust score in a direction to reduce the perceived trustworthiness of the corresponding probe, and that a penalty recovery term changes a trust score in the opposite direction.

The examples described above involve maintaining and updating trust scores for probes/landmarks. Alternatively or additionally, trust scores may be maintained and updated for intermediary entities involved in geolocation, for example hops, routers, autonomous systems, etc. In such examples, where a contradiction is found, a penalty may be computed and applied to trust scores for at least one or some or all (or every) intermediary entity involved in the measurement obtained between the probe concerned and the target (or between the probes concerned in the case of a distance-contradiction). The trust scores may be maintained and updated in the same way as described above for probes/landmarks.

Intermediary entities may include things involved or associated with a particular measurement (which takes a path/route from source to destination), for example the actual physical or virtual equipment (routers, switches, hubs, interfaces or other devices), groupings/collections of equipment (links, peering points, internet exchanges, cables, paths/routes, nodes, hops, sites, buildings), and organisations associated with the equipment, transmission media, or said groupings (autonomous systems, vendors, Internet Service Providers). Public identifiers that may be used to identify intermediary entities include, IP Addresses, Autonomous System Numbers, MAC Addresses, Public Keys, Internet Prefixes, Domain Names etc.

Trust scores for intermediary entities may be referred to as intermediary trust scores. Intermediary trust scores may be maintained for intermediary entities. When a contribution is added to a trust score penalty for a probe a contribution may also be added to an intermediary trust score penalty corresponding to at least one intermediary entity along the route that the probe used to make the measurement which resulted in the contribution being added to the trust score penalty (the measured route (or measurement route)).

Region trust scores may be maintained for geographic locations which may include sites, buildings, streets, towns, cities, countries, or other geographic regions. When a contribution is added to a trust score penalty for a probe a contribution may also be added to a region trust score penalty corresponding to the region in which the probe is located.

Furthermore, aspect trust scores may be maintained for aspects associated with measurements from the probes. Aspects may include any of types of transmission media (along the measured/measurement route between a said probe and the target or a probe and another said probe in the case of a distance-contradiction), internet service providers (in charge of at least a portion of the measured/measurement route between a said probe and the target or a probe and another said probe in the case of a distance-contradiction); vendors (e.g. of cables or devices used along the measured/measurement route between a said probe and the target or a probe and another said probe in the case of a distance-contradiction); and autonomous systems (in charge of at least a portion of the measured route between a said probe and the target or a probe and another said probe in the case of a distance-contradiction). When a contribution is added to a trust score penalty for a probe a contribution may also be added to an aspect trust score penalty corresponding to at least one aspect associated with the probe's measurement (e.g. the ISP responsible for at least a portion of the measured route or the type of transmission media (such as optical fibre or cable or a wireless standard) of at least a portion of the measured route) along the route that the probe used to make the measurement which resulted in the contribution being added to the trust score penalty (the measured route (or measurement route)).

An Autonomous System is a connected group of one or more IP prefixes run by one or more network operators which has a single and clearly defined routing policy. (ietf.org/rfc/rfc1930.txt).

Where intermediary entities or aspects can be directly associated with a probe (that is, associated with a probe across different geolocation instances, e.g. the ISP of the sole network the probe uses), they may also be used in probabilistic probe selection/filtering. In such a case, before selection of probes for the next instance of geolocation the trust score for the probe can be modified based on the intermediary/aspect trust score. Alternatively, a modified selection weight can be computed for the probe by incorporating the trust score of the associated intermediary entity or aspect into the calculation of the weight that is input into the random weighted selection algorithm (i.e. used in the probabilistic selection - e.g. one that uses a cumulative density function), which already includes the trust score of the probe (and may include the proximity of the probe to an estimate of the target location). For example, incorporating the trustworthiness of the ISP associated directly with the probe (as an additional component to weight construction) could be achieved by incorporating the aspect trust score of the ISP as shown below

$$\rho_i[x] = \frac{T_i[x]^{a_T} C_i[x]^{a_c}}{d_i[x]^{a_d} \sum_{n=1}^{N} \frac{T_i[x]^{a_T} C_i[x]^{a_c}}{d_i[x]^{a_d}}}$$

Where $C_i[x]$ is the aspect trust score of the ISP associated with the probe, raised to the power of a coefficient $a_C$ that balances its contribution to the final weight value.

In general, the trust scores of probes may be modified based on the region trust scores of the regions in which the probes are located, before the selection of probes for the next geolocation instance. Alternatively, the above equation may be used so that the selection probability of each probe is based on the region (e.g. city) in which it is located, for example where $C_i[x]$ in this case is the region trust score of the region in which the probe is located, raised to the power of a coefficient that balances its contribution to the final weight value.

Modifying a trust score based on a region/aspect/intermediary trust score may comprise multiplying the trust score with the region/aspect/intermediary trust score raised to a the power of a coefficient that balances its effect on the modified trust score, A trust score may be modified based on any of the region/aspect/intermediary trust scores.

The intermediary trust scores may be used to resolve measurement discrepancies by combining them with the trust scores of the probes $T_i[x]^{a_T}C_i[x]^{a_C}$ such that the combined trust score is used to resolve between discrepancies. Alternatively, the un-modified trust scores may be used, and when these are equal so that the contradiction cannot be resolved, the intermediary and/or aspect trust scores may be used to resolve the contradiction. For example, an average of all the intermediary/aspect trust scores related to a probe in the geolocation instance concerned may be used and compared with that for the other probe to determine which measurement is more "trustworthy", i.e. more likely to be correct.

A focus of embodiments disclosed herein is improving the real-world reliability of active geolocation by considering and addressing a threat model in which the probes used could be malicious.

By introducing trust scores for each probe involved in the geolocation process, previous geolocation measurements can be analysed to identify indications of malfeasance and used to update the trust scores of the probes accordingly. Over time, the trust scores of malicious probes would diverge from that of benign and thus the trust scores would be able to be used as a basis of malicious measurement mitigation.

The trust scores may be used in a number of ways. In one such way, for example, the trust scores are applied to probabilistically reduce the likelihood of selecting misbehaving nodes in future. In another way, for example, the trust scores could be used to discern between conflicting measurements in geolocation. This discernment enables the elimination of contributions of malicious nodes in the geolocation process, instead of allowing malicious contributions to affect the precision, accuracy and reliability of location estimations - which is the status quo today in the vast majority of solutions.

Unlike other solutions (e.g. the first and second comparative examples), embodiments disclosed herein do not require the target IP address to participate in custom Internet geolocation protocols for the geolocation threat mitigations to work. This leads to greater applicability in the real world of the embodiments disclosed herein, for example when it comes to the geolocation of legacy devices which may be unable to update their software or firmware to adopt a new protocol.

A worked example will now be described.

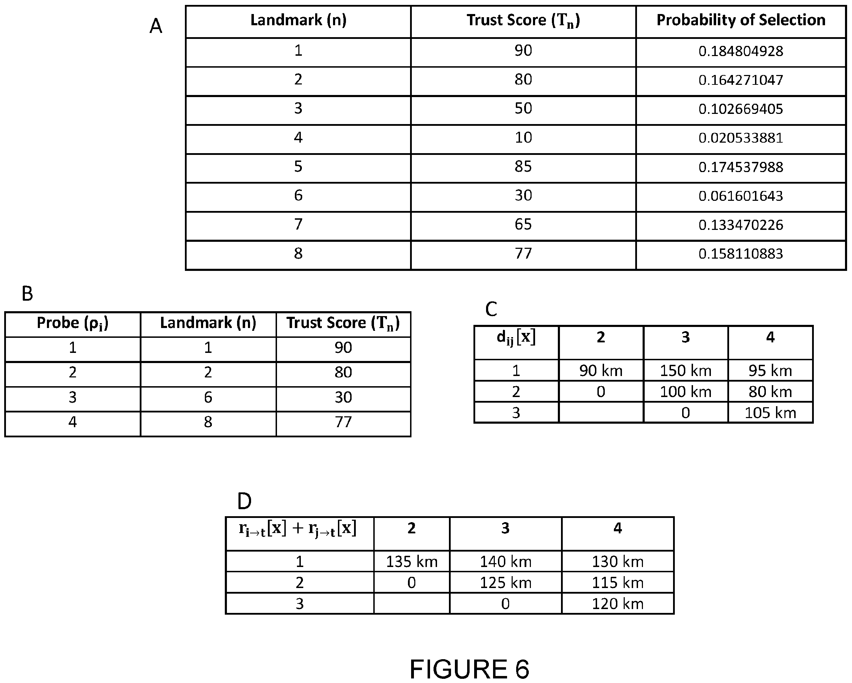

Figure 6 illustrates tables A-D corresponding to a worked example. Table A includes the trust scores of the set of L landmarks as well as the selection probability calculated as described above with respect to step 4..

Landmarks 1, 2, 6, and 8 are selected for use as probes in an instance of geolocation and assigned probe indices for that instance. During this geolocation instance (or measurement/geolocation cycle) x, the look up table ($F_L$) for the selected landmarks is shown in table B (which includes the trust score here, but this is not necessary).

The distances between the selected probes are shown in table C. For example, these distances are computed using the Haversine formula and the longitude and latitude of the probes.

Following the first instance of geolocation, the measurement-based distance estimates between each probes and the target are found to be:

1. 75 km
2. 60 km
3. 65 km
4. 55 km

The sum of the radial distance estimate of probe pairs is shown in table D.

Using the first penalty process, it is apparent that a ZRI contradiction occurs between probes 3 and 1 (since the sum of the radial distance estimates is less than the distance between the probes). As a result of the ZRI contradiction between probes 1 and 3, both probes will receive a penalty ( $\zeta_i^{ZRI}[x]$ ) of 0.33 whilst the other probes 2 and 4 receive a penalty of 0, since they were not involved in any ZRI contradiction during that epoch of geolocation. The penalty amounts are multiplied by a coefficient and are deducted from the trust scores of the respective entities (probes).

Considering a scenario in which the geolocation results reveal a contradiction between probes 3 and 1, for example as illustrated in Figure 3, the trust scores are used to determine which measurement to follow. In this case, probe 1 has a higher trust score and therefore the measurement based on probe 1 is selected. Alternatively or additionally, where a contradiction (e.g. ZRI contradiction) is found between two probe measurements, one of those probe measurements could be rejected based on the trust scores. That is, since a contradiction (ZRI contradiction) has been found between probes 1 and 3, using the trust scores of probes 1 and 3 it is determined that the measurement from probe 1 is more likely to be correct, since probe 1 has a higher trust-score. Thus, the probe 1 measurement is accepted and the probe 3 measurement rejected.

Aspects have been described above in the context of internet or IP geolocation. The aspects disclosed herein are readily applicable to other types of geolocation in which probes, anchors, or landmarks are involved in the estimation of distances from their known locations to a target node. Possible geolocation scenarios where the embodiments and aspects disclosed herein may be employed include:

- Determining the position of a vehicle using MLAT (multilateration)
- Mobile phone tracking using radio signals between cell towers
- Localization via GPS.

Advantages of embodiments disclosed herein include:

- More informed rejection of contradictory geolocation measurements by malicious probes
- Increased geolocation resilience to higher numbers of malicious devices

- This is because there will be more information available to eliminate malicious measurements instead of incorporating them into the geolocation estimation

- Probabilistic Avoidance of malicious landmarks during the *probe selection* phase, which would reduce the number of malicious inputs that require filtering
- Enables value-adding geolocation orchestration by managing trust scores for mitigation of adversarial attacks, across probe networks.

Embodiments disclosed herein (which may be referred to as PARL (Probe Adversary Resistant Localization)) may leverage objective indicators of trustworthiness to enhance the reliability of geolocation over the Internet, which in turn enhances the trust in the applications of IP geolocation described earlier.

Multiple networks of probes may be leveraged. An advantage of leveraging multiple probe networks is increased reach, and thus accuracy and precision of geolocations. Further, more distributed probes means increased resilience to adversarial threats such as coordinated measurement manipulations and DDoS attacks, since greater attack strengths would be required for successful attacks.

Embodiments disclosed herein tackle the challenge of active geolocation under a threat model that considers the possibility that probes may be malicious, by assigning trust scores for each probe, which are leveraged in order to 1) reduce the likelihood of selecting malicious probes and/or 2) resolve between contradicting probe measurements, during geolocation, and eliminate malicious probe measurements to preserve measurement accuracy. The trust scores are persistently bound to each probe, such that the reliability of each probe or landmark is captured between measurements, and are objectively maintained by transforming the latest probe measurements into penalties derived from objective indicators of malice. Embodiments enable a geolocation orchestrator to leverage multiple separate probe networks, whilst guarding against the possibility of malice from probes within other probe networks.

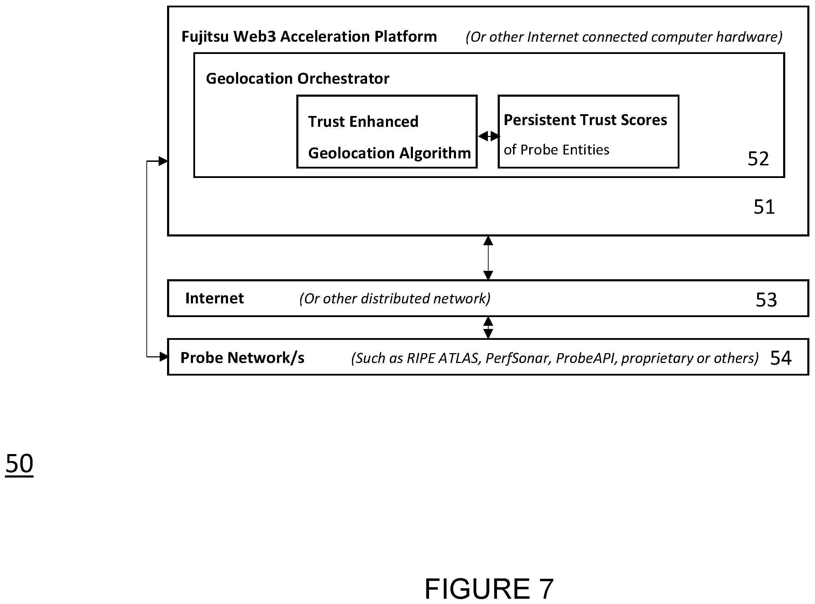

Figure 7 is a diagram illustrating a system 50 comprising a Fujitsu Web3 acceleration platform (or other internet connected computer hardware) 51, a distributed network 53 such as the Internet, and at least one probe network 54. The hardware 51 comprises a geolocation orchestrator 52 configured to carry out any of the steps and/or embodiments disclosed herein. For example, Figure 7 shows a trust enhanced geolocation algorithm (which may correspond to any method disclosed herein) being carried out in the geolocation orchestrator 52, and persistent trust scores being maintained and updated. The at least one probe network may include RIPE ATLAS, PerfSonar, ProbeAPI, proprietary and/or others.

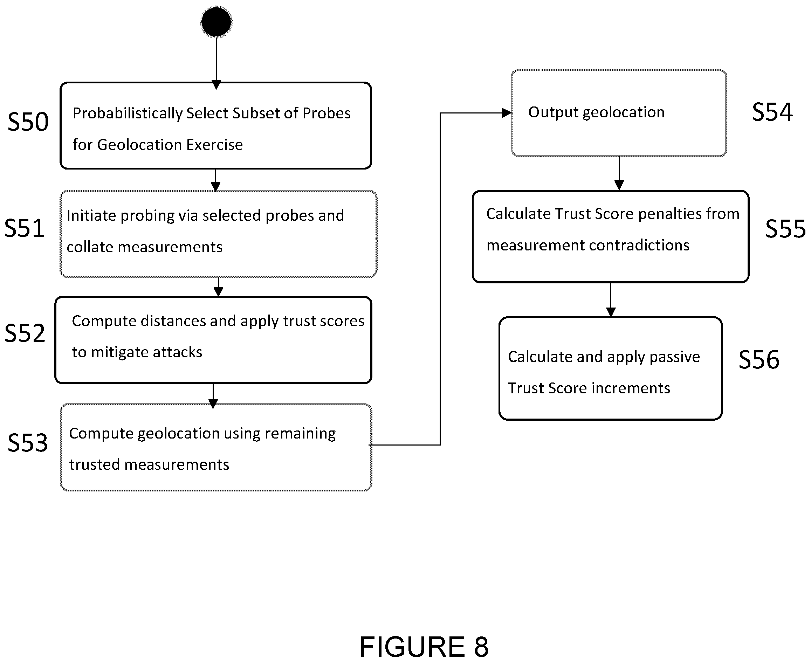

Figure 8 illustrates a method comprising steps S50-S56. Step S50 comprises probabilistically selecting probes for an instance of geolocation (based on trust scores as described above). Step S51 comprises initiating probing using selected probes and collating the measurements. Step S52 comprises computing distances and applying trust scores to mitigate attacks. That is, Step S52 comprises determining any contradictions that exist (e.g. any of ZRI contradiction, Encompass-contradiction, Traceroute-contradiction, Distance-contradiction) and rejecting the probe measurement with the lower trust score. Step S53 comprises computing the target location using the probe measurements (that were not rejected). Step S54 comprises outputting the geolocation result (target location). Step S55 comprises computing trust score penalties based on the determined contradictions. Step S56 comprises updating the trust scores based on the penalties. Any steps in Figure 8 may be carried out in accordance with earlier descriptions of corresponding steps.

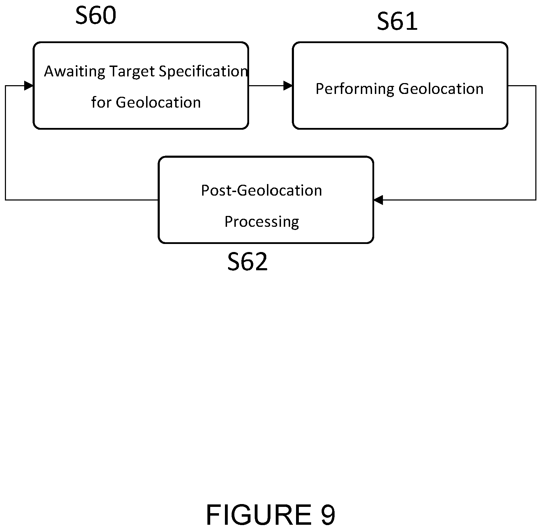

Figure 9 illustrates a method comprising steps S60-S62 which may be performed by a geolocation system. Step S60 comprises awaiting the specification of the target for geolocation. Step S61 comprises performing geolocation (after the target has been specified). Step S62 comprises post-geolocation processing). Steps S61 and S62 may include processing of embodiments described with respect to any of the Figures 1, 4, and 5.

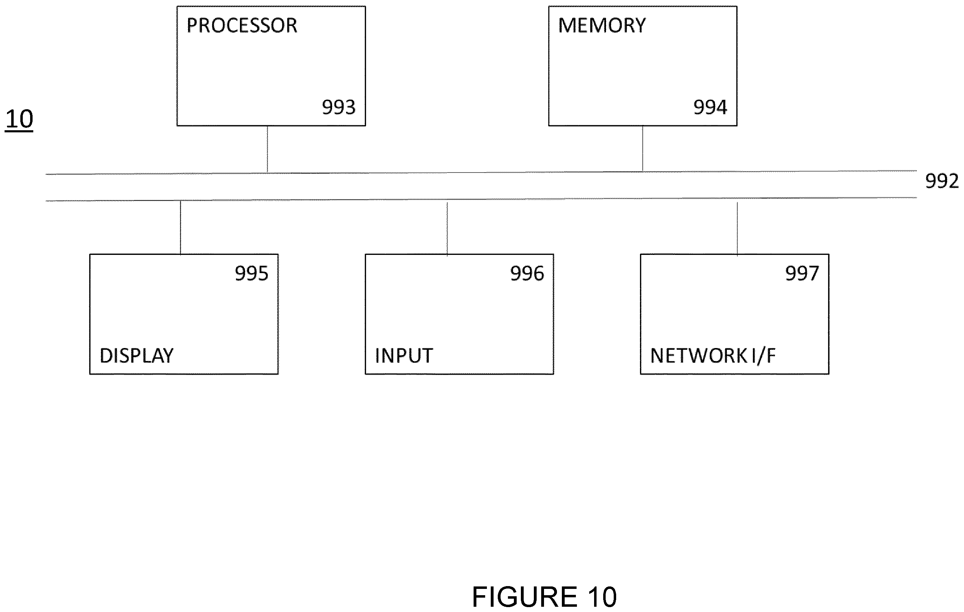

Figure 10 is a block diagram of an information processing apparatus 10 or a computing device 10, such as a data storage server, which embodies the present invention, and which may be used to implement some or all of the operations of a method embodying the present invention and perform some or all of the tasks of apparatus of an embodiment. The computing device 10 may be used to implement any of the method steps described above, e.g. any of steps S12-S18, 1-5, S22-S36, S50-S56, and S60-S62.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S12-S18, 1-5, S22-S36, S50-S56, and S60-S62. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store trust scores and/or a lookup table and/or penalties and/or constants and/or equations and/or distance measurements and/or longitude and latitude coordinates and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as trust scores and/or a lookup table and/or penalties and/or constants and/or equations and/or distance measurements and/or longitude and latitude coordinates and/or other data, described above, and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 10. Such a computing device need not have every component illustrated in Figure 10, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising:

   computing, for each probe of a plurality of probes used in a first instance of geolocation for locating a target, a trust score based on a trust score penalty corresponding to the probe; and
   selecting, based on the trust scores, at least one probe from the plurality of probes for use in a second instance of geolocation,
   wherein the computer-implemented method comprises, before computing the trust scores based on the trust score penalties, computing the trust score penalties by performing a penalty computation process comprising:

   for each pair of the plurality of probes, comparing a sum of respective distances of the probes of the pair to the target with a distance between the two probes of the pair, and if the distance between the two probes of the pair is greater than the sum of the respective distances of the probes of the pair to the target, adding a contribution to each of the trust score penalties corresponding respectively to the probes of the pair; and/or
   for each probe of the plurality of probes, comparing a distance of the probe to the target with distance measures corresponding to the other probes, respectively, wherein each distance measure comprises a sum of a distance between the probe and the corresponding said other probe and a distance of the corresponding said other probe to the target, and, for each comparison, if the distance of the probe to the target is greater than the distance measure corresponding to the said other probe, adding a contribution to each of the trust score penalties corresponding respectively to the probe and the other said probe.

2. The computer-implemented method as claimed in claim 1, wherein each distance measure comprises a buffer contribution which is a percentage of the sum.

3. The computer-implemented method as claimed in claim 1 or claim 2, wherein computing, for each probe of the plurality of probes, a trust score based on the trust score penalty corresponding to the probe comprises updating, based on the trust score penalty, an initial trust score corresponding to the probe and wherein the initial trust score is a previous trust score corresponding to a previous instance of geolocation.

4. The computer-implemented method as claimed in any of claims 1-3, wherein selecting at least one probe from the plurality of probes for use in the second instance of geolocation comprises using a probabilistic filter, wherein a probability of selecting a probe is based on the trust score corresponding to the probe.

5. The computer-implemented method as claimed in any of the preceding claims, comprising, when a plurality of probes report contradictory measurements as a result of the first instance of geolocation, determining which measurement to accept based on the trust scores of the probes.

6. The computer-implemented method as claimed in any of the preceding claims, comprising:

   maintaining a plurality of region trust scores corresponding respectively to a plurality of geographic regions in which probes are located;
   when a contribution is added to a trust score penalty corresponding to a probe, adding a contribution to a region trust score penalty corresponding to the region in which the probe is located; and
   when a trust score corresponding to a probe is adjusted based on a trust score penalty, adjusting the trust score corresponding to the geographical region in which the probe is located based on the corresponding region trust score penalty.

7. The computer-implemented method as claimed in claim 6, comprising, before selecting, based on the trust scores, at least one probe from the plurality of probes for use in the second instance of geolocation, modifying the trust score corresponding to each probe based on the region trust score corresponding to the region in which the probe is located.

8. The computer-implemented method as claimed in any of the preceding claims, comprising:

   maintaining a plurality of intermediary trust scores corresponding respectively to a plurality of intermediary entities included in measured routes between the probes and the target;
   when a contribution is added to a trust score penalty corresponding to a probe, adding a contribution to at least one intermediary trust score penalty corresponding to at least one intermediary entity included in the measured route between the probe and the target; and
   when a trust score corresponding to a probe is adjusted based on a trust score penalty, adjusting the at least one intermediary trust score corresponding to the at least one intermediary entity included in the measured route between the probe and the target based respectively on the corresponding at least one intermediary trust score penalty.

9. The computer-implemented method as claimed in claim 8, comprising, when a plurality of probes report contradictory measurements as a result of the first instance of geolocation, determining which measurement to accept based on the trust scores of the probes and based on at least one intermediary trust score corresponding to at least one intermediary entity included in the measured route between the probe and the target in that instance of geolocation.

10. The computer-implemented method as claimed in any of the preceding claims, comprising, before computing, for each of the plurality of probes, the trust score based on the trust score penalty corresponding to the probe:
    for each pair of the plurality of probes:

    comparing a pair of traceroutes corresponding to the pair of probes and, when a hop between a first node and second node is present in both traceroutes, comparing a first hop distance between the first and second nodes computed based on one of the traceroutes of the pair with a second hop distance between the first and second nodes computed based on the other traceroute of the pair, respectively;
    when the magnitude of the difference between the first and second hop distances is above a hop-distance-threshold level, adding a contribution to each of the trust score penalties corresponding respectively to the probes of the pair.

11. The computer-implemented method as claimed in any of the preceding claims, comprising, before computing, for each of the plurality of probes, the trust score based on the trust score penalty corresponding to the probe:
    for each pair of the plurality of probes:

    comparing a first distance between the probes estimated by one of the probes to a second distance between the probes estimated by the other probe of the pair; and
    when the magnitude of the difference between the first and second distance is above a distance-threshold level, adding a contribution to each of the trust score penalties corresponding respectively to the probes of the pair.

12. The computer-implemented method as claimed in any of the preceding claims, comprising performing the first instance of geolocation.

13. The computer-implemented method as claimed in any of the preceding claims, comprising performing the second instance of geolocation using the at least one selected probe.

14. A computer program which, when run on a computer, causes the computer to carry out a method comprising:

computing, for each probe of a plurality of probes used in a first instance of geolocation for locating a target, a trust score based on a trust score penalty corresponding to the probe; and
selecting, based on the trust scores, at least one probe from the plurality of probes for use in a second instance of geolocation,
wherein the computer-implemented method comprises, before computing the trust scores based on the trust score penalties, computing the trust score penalties by performing a penalty computation process comprising:

for each pair of the plurality of probes, comparing a sum of respective distances of the probes of the pair to the target with the distance between the two probes of the pair, and if the distance between the two probes of the pair is greater than the sum of the respective distances of the probes of the pair to the target, adding a contribution to each of the trust score penalties corresponding respectively to the probes of the pair; and/or
for each probe of the plurality of probes, comparing a distance of the probe to the target with distance measures corresponding to the other probes, respectively, wherein each distance measure comprises a sum of a distance between the probe and the corresponding said other probe and a distance of the corresponding said other probe to the target, and, for each comparison, if the distance of the probe to the target is greater than the distance measure corresponding to the said other probe, adding a contribution to each of the trust score penalties corresponding respectively to the probe and the other said probe.

15. An information processing apparatus comprising a memory and a processor connected to the memory, wherein the processor is configured to:

compute, for each probe of a plurality of probes used in a first instance of geolocation for locating a target, a trust score based on a trust score penalty corresponding to the probe; and
select, based on the trust scores, at least one probe from the plurality of probes for use in a second instance of geolocation,
wherein the processor is configured to, before computing the trust scores based on the trust score penalties, compute the trust score penalties by performing a penalty computation process comprising:

for each pair of the plurality of probes, comparing a sum of respective distances of the probes of the pair to the target with the distance between the two probes of the pair, and if the distance between the two probes of the pair is greater than the sum of the respective distances of the probes of the pair to the target, adding a contribution to each of the trust score penalties corresponding respectively to the probes of the pair; and/or
for each probe of the plurality of probes, comparing a distance of the probe to the target with distance measures corresponding to the other probes, respectively, wherein each distance measure comprises a sum of a distance between the probe and the corresponding said other probe and a distance of the corresponding said other probe to the target, and, for each comparison, if the distance of the probe to the target is greater than the distance measure corresponding to the said other probe, adding a contribution to each of the trust score penalties corresponding respectively to the probe and the other said probe.

FIGURE 1

FIGURE 2

FIGURE 3

| S22 | Perform first instance of geolocation using at least one probe |
|---|---|

↓

| S24 | Compute a trust score for each probe used in first instance of geolocation |
|---|---|

↓

| S25 | Resolve discrepancy based on trust scores |
|---|---|

↓

| S26 | Select at least one probe for second instance of geolocation based on trust scores |
|---|---|

↓

| S32 | Perform second instance of geolocation using the selected at least one probe |
|---|---|

FIGURE 4

(from step S32)

S34 | Compute a trust score for each probe used in second instance of geolocation

S35 | Resolve discrepancy based on trust scores

S36 | Select at least one probe for third instance of geolocation based on trust scores

FIGURE 5

EP 4 530 658 A1

A

| Landmark (n) | Trust Score ($T_n$) | Probability of Selection |
|---|---|---|
| 1 | 90 | 0.184804928 |
| 2 | 80 | 0.164271047 |
| 3 | 50 | 0.102669405 |
| 4 | 10 | 0.020533881 |
| 5 | 85 | 0.174537988 |
| 6 | 30 | 0.061601643 |
| 7 | 65 | 0.133470226 |
| 8 | 77 | 0.158110883 |

B

| Probe ($p_i$) | Landmark (n) | Trust Score ($T_n$) |
|---|---|---|
| 1 | 1 | 90 |
| 2 | 2 | 80 |
| 3 | 6 | 30 |
| 4 | 8 | 77 |

C

| $d_{ij}[x]$ | 2 | 3 | 4 |
|---|---|---|---|
| 1 | 90 km | 150 km | 95 km |
| 2 | 0 | 100 km | 80 km |
| 3 | | 0 | 105 km |

D

| $r_{i \to t}[x] + r_{j \to t}[x]$ | 2 | 3 | 4 |
|---|---|---|---|
| 1 | 135 km | 140 km | 130 km |
| 2 | 0 | 125 km | 115 km |
| 3 | | 0 | 120 km |

FIGURE 6

**Fujitsu Web3 Acceleration Platform** *(Or other Internet connected computer hardware)*

**Geolocation Orchestrator**

| **Trust Enhanced** **Geolocation Algorithm** | **Persistent Trust Scores** of Probe Entities |
|---|---|

52

51

**Internet** *(Or other distributed network)* 53

**Probe Network/s** *(Such as RIPE ATLAS, PerfSonar, ProbeAPI, proprietary or others)* 54

50

FIGURE 7

EP 4 530 658 A1

S50 — Probabilistically Select Subset of Probes for Geolocation Exercise

S51 — Initiate probing via selected probes and collate measurements

S52 — Compute distances and apply trust scores to mitigate attacks

S53 — Compute geolocation using remaining trusted measurements

S54 — Output geolocation

S55 — Calculate Trust Score penalties from measurement contradictions

S56 — Calculate and apply passive Trust Score increments

FIGURE 8

EP 4 530 658 A1

S60

S61

Awaiting Target Specification
for Geolocation

Performing Geolocation

Post-Geolocation
Processing

S62

FIGURE 9

FIGURE 10

Europäisches
Patentamt

European
Patent Office

Office européen
des brevets

# EUROPEAN SEARCH REPORT

**Application Number**

EP 23 20 1062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KATHARINA KOHLS ET AL: "VerLoc: Verifiable Localization in Decentralized Systems", ARXIV.ORG, CORNELL UNIVERSITY LIBRARY, 201 OLIN LIBRARY CORNELL UNIVERSITY ITHACA, NY 14853, 1 October 2021 (2021-10-01), XP091068706, * the whole document * | 1-15 | INV. G01S5/02 G01S19/21 H04W12/104 |
| X | US 2019/317221 A1 (MOLINA-MARKHAM ANDRES D [US]) 17 October 2019 (2019-10-17) | 1-7, 12-15 | |
| A | * paragraph [0062] - paragraph [0142] * * figures 1-12 * * abstract * | 8-11 | |
| X | US 2020/200857 A1 (WIROLA LAURI AARNE JOHANNES [FI] ET AL) 25 June 2020 (2020-06-25) | 1-7, 12-15 | |
| A | * paragraph [0047] - paragraph [0063] * * paragraph [0110] - paragraph [0141] * * figures 1-6 * * abstract * | 8-11 | |
| A | GUEYE BAMBA ET AL: "Leveraging Buffering Delay Estimation for Geolocation of Internet Hosts", 15 May 2006 (2006-05-15), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 319 - 330, XP047449662, ISBN: 978-3-540-74549-5 * the whole document * | 1-15 | |

**TECHNICAL FIELDS SEARCHED (IPC)**

G01S
H04W

The present search report has been drawn up for all claims

| Place of search | Date of completion of the search | Examiner |
|---|---|---|
| Munich | 13 March 2024 | Galmiche, Aurélien |

EPO FORM 1503 03.82 (P04C01)

## ANNEX TO THE EUROPEAN SEARCH REPORT
## ON EUROPEAN PATENT APPLICATION NO.

EP 23 20 1062

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2024

| Patent document cited in search report | | Publication date | Patent family member(s) | | Publication date |
|---|---|---|---|---|---|
| US 2019317221 | A1 | 17-10-2019 | NONE | | |
| US 2020200857 | A1 | 25-06-2020 | EP | 3672304 A1 | 24-06-2020 |
| | | | US | 2020200857 A1 | 25-06-2020 |

EPO FORM P0459

For more details about this annex : see Official Journal of the European Patent Office, No. 12/82